(19) **Europäisches Patentamt / European Patent Office / Office européen des brevets**

(11) **EP 1 564 575 B1**

(12) **EUROPEAN PATENT SPECIFICATION**

(45) Date of publication and mention
of the grant of the patent:
**02.04.2008 Bulletin 2008/14**

(51) Int Cl.:
***G02B 21/32*** *(2006.01)*　　***G02B 21/24*** *(2006.01)*
***G02B 21/36*** *(2006.01)*

(21) Application number: **05002699.6**

(22) Date of filing: **09.02.2005**

(54) **Micromanipulation system operating within the field of view of a microscope**

Mikromanipulationssystem zum Gebrauch im Gesichtsfeld eines Mikroskops

Dispositif micromanipulateur pour une utilisation dans le champ de vision d'un microscope

(84) Designated Contracting States:
**DE**

(30) Priority: **10.02.2004 JP 2004033031**

(43) Date of publication of application:
**17.08.2005 Bulletin 2005/33**

(73) Proprietor: **Olympus Corporation**
**Tokyo 151-0072 (JP)**

(72) Inventor: **Yuri, Kiyoshi**
**Hachioji-shi**
**Tokyo 193-0823 (JP)**

(74) Representative: **von Hellfeld, Axel**
**Wuesthoff & Wuesthoff**
**Patent- und Rechtsanwälte**
**Schweigerstrasse 2**
**81541 München (DE)**

(56) References cited:
WO-A-99/28725　　　　US-A- 5 886 684
US-A1- 2003 197 925

• SUZUKI A ET AL: "Automated micro handling" COMPUTATIONAL INTELLIGENCE IN ROBOTICS AND AUTOMATION, 2003. PROCEEDINGS. 2003 IEEE INTERNATIONAL SYMPOSIUM ON JULY 16 - 20, 2003, PISCATAWAY, NJ, USA,IEEE, vol. 1, 16 July 2003 (2003-07-16), pages 348-353, XP010651749 ISBN: 0-7803-7866-0

## Description

### Cross Reference to Related Application

This application is based on and claims the benefit of priority of the prior Japanese Patent Application No. 2004-33031 filed in Japan on February 10, 2004.

### Field of the Invention

The present invention relates to a micromanipulation system, and more particularly to a micromanipulation system provided with a microscope and a micromanipulator for operations in minute scales (that is, micro manipulation), such as three-dimensional transfer of a fine needle, injection/absorption and the like within the view of the microscope.

### Description of the Related Art

For example, when injecting a DNA solution into a specimen, such as a cell, an egg or the like, a micromanipulation system provided with a micromanipulator and a microscope is used. In the micromanipulator, a fine needle is disposed to inject the DNA solution or the like into the specimen and the microscope is used to observe the injection.

In a typical micromanipulation system, a microscopic instrument, such as a fine needle is manipulated within the view of the microscope, and its picture is shown on a CRT display. The fine needle is inserted into the microscopic specimen, such as a cell, an egg or the like which is placed in a container, such as a Schale (laboratory dish) or the like, while observing the displayed contents and a prescribed process is performed.

Conventionally, these processes have been manually performed. However, if there are many target fine specimens, precise work, such as aligning the position of the fine needle with each specimen and inserting the needle into the specimen must be executed consecutively. Thus, the operator load is high, and an improvement in operability is desired.

More particularly, alignment in the Z-axis direction must be determined based on the degree of blurring of focuses of the specimen and the needle in the microscope picture. Therefore, the alignment in the vertical direction requires experience and skill, which is a problem in operation for many operators.

In order to improve the operability of the alignment of the needle and specimen, technologies for automatically aligning them using an electro-motive specimen stage and a micromanipulator have been presented.

For example, Japanese Patent Application Laid-open No. Hei 01-3560 discloses a technology for automatically calculating coordinates of a stage on which a specimen exists when indicating the position of the specimen on a monitor, aligning the specimen and inserting a fine needle into the specimen. Japanese Patent Application Laid-open No. Hei 06-109979 discloses a technology for simplifying the respective height adjustments of a specimen and a fine needle by displaying the vertical position of a micromanipulator.

The article "Automated Micro Handling" by Suzuki et al. published in the Proceedings 2003 IEEE International Symposium on Computational Intelligence in Robotics and Automation describes a manipulation system relating to an automation of calibration, auto-focusing function using color information, auto-recognition of object, and auto-pick up of the object.

International Patent Application No. WO 99/28725 describes an automated system relating to micro-dissection of chromosomes on a stage of an inverted optical microscope. Other systems and methods for observing and manipulating microscopic specimens are known from United States Patent No. 5,886,684 and United States Patent Application Publication No. 2003/197925.

### Summary of the Invention

A micromanipulation system, a computer-readable storage medium to control a micromanipulation system and a micromanipulation system control method for use in a microscope, are described in claims 1, 10 and 14, respectively.

Preferred embodiments of the invention are described in the dependent claims.

### Brief Description of the Drawings

Fig. 1 shows the entire configuration of the micromanipulation system in the first preferred embodiment.
Fig. 2 is a flowchart showing the process of the first preferred embodiment.
Fig. 3 explains the vertical adjustment of a specimen and a fine needle in the first preferred embodiment.

Fig. 4 explains the calculation of a contrast value in the first preferred embodiment.

Fig. 5 shows an area A whose center is an injection position, in the second preferred embodiment.

Fig. 6 shows the process flow of the second preferred embodiment.

Fig. 7 shows the process flow of the third preferred embodiment.

Fig. 8 shows the process flow of the fourth preferred embodiment.

Fig. 9 shows the process of updating a contrast evaluation area according to the transfer of a specimen in the fourth preferred embodiment.

## Description of the Preferred Embodiments

<The first preferred embodiment>

In the present invention, even for a plurality of specimens each of different height, a manipulator can be automatically operated. For that purpose as an initial process, the position where the tip of a fine needle is focused in an object lens is registered as the Z -direction reference position of a manipulator driving unit.

In this preferred embodiment, if each specimen has a different height, during a focusing process, the height of the injection position of each specimen is controlled so that the contrast value attains a maximum value across the entire specimen picture data.

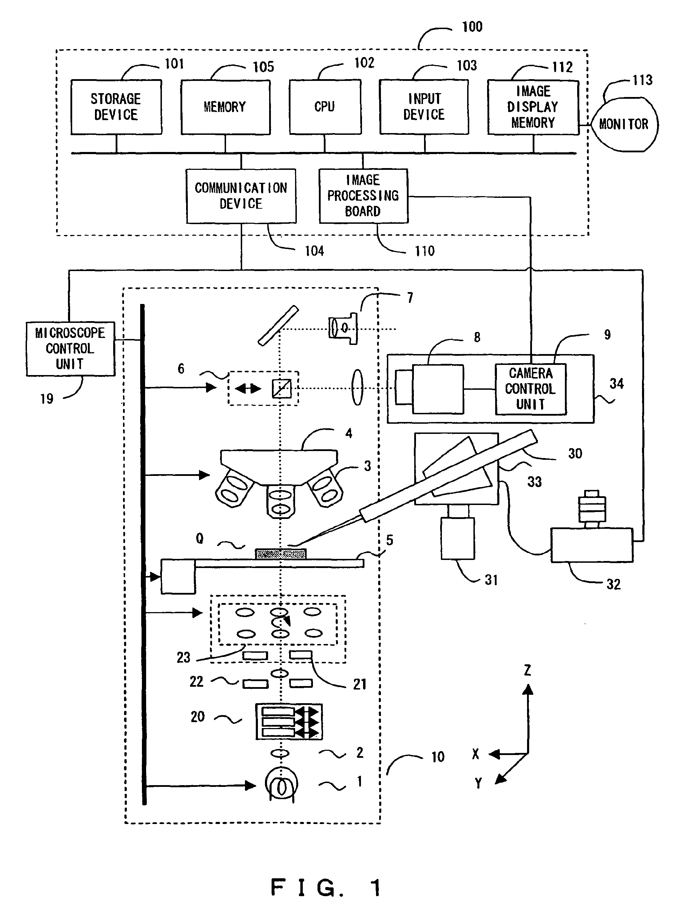

Fig. 1 shows the entire configuration of the micromanipulation system in this preferred embodiment. This system mainly comprises a microscope unit 10, micromanipulator unit (including 30, 31, 32 and 33), a camera unit 34, a computer 100 and an image monitor 113.

The microscope unit 10 optically captures a microscopic image from a specimen container Q which accommodates a specimen, such as an egg, a cell or the like, at a desired magnification. The micromanipulator unit (including 30, 31, 32 and 33) three-dimensionally transfers a fine needle, injects an injection solution and suctions a cell within the view of the microscope, using the fine needle. The camera unit 34 converts the observed image of the specimen into electronic image signals. The computer 100 forms a highly magnified image from the image signals, and outputs a control signal to each unit, based on the image. The image monitor 113 displays the formed image and an operation screen.

The microscope unit 10 has a specimen stage 5 for mounting the specimen container Q containing a specimen K to be manipulated. Below the specimen stage 5 are deployed a transmission filter unit 20, a transmission field stop 21, a transmission aperture stop 22, an optical condenser device unit 23 and a transmission illumination light source 1, for example, a halogen lamp. The transmission illumination light source 1 illuminates the specimen container Q on the specimen stage from below.

On the optical axis of the observation path above the specimen stage 5, a revolver 4 and an observation beam splitter 6 are disposed. The revolver 4 is used to switch a plurality of object lenses 3a-3f. The observation beam splitter 6 is used to split the observed specimen image into two beams. This observation beam splitter 6 splits the observation light path into two beams. An eyepiece 7 is disposed in one observation light path, and a camera head 8 is provided in the other light path. The microscope unit 10 also comprises a microscope control unit 19 for controlling all the microscope components.

In the microscope 10 configured so, illumination generated by the transmission illumination light source 1 is collected by a collector lens 2 and is input to the transmission filter unit 20. The transmission filter unit 20 adjusts the illumination. The adjusted illumination illuminates a specimen (in specimen container Q) from below of the illumination aperture unit of the specimen stage 5 through the transmission field stop 21, the transmission aperture stop 22 and the optical condenser device unit 23.

The microscope control unit 19 controls the transfer along the optic axis relative to the specimen stage 5 to focus the specimen, and also in a plane formed by the two horizontal dimensions orthogonal to be optic axis of the microscope to modify the observation point of the specimen container Q. Simultaneously, the microscope control unit 19 can detect its position in each direction.

The light (observed specimen image) that is transmitted through the specimen (in the specimen container Q) and is collected by the object lens 3 is directed to the camera head 8 through the observation beam splitter 6. The camera unit 34 comprises the camera head 8 and a camera control unit 9. The camera head 8 comprises a solid-state imaging device and an optical image formation system. The solid-state imaging device is made up of, for example, a charge modulation device (CMD). The optical image formation system forms an image of the light which is transmitted through the specimen and onto the CMD.

The camera control unit 9 comprises an automatic gain control (AGC) amplifier to automatically adjust the gain of the amplifier (ie the output voltage of the camera control unit 9). Then, the camera control unit 9 which controls the camera head 8 transfers analog image data from the camera head 8 to an image processing board 110.

The image processing board 110 digitizes, the analog image data, JPEG-compresses it, and stores it. The stored digital image data is transferred to image display memory 112 and displayed on the image monitor 113.

In each of the micromanipulator unit (including 30, 31, 32 and 33), an arm 31 with the instrument holder 30 at its distal end is provided and projected on an operation console side. The instrument holder 30 holds microscopic instruments, such as injection pipettes, suction pipettes and the like.

The driving mechanism 33 is comprised for horizontal directions (X and Y directions) and a vertical direction (Z direction) in order to transfer a microscopic instrument held by the instrument holder 30. This driving mechanism comprises an X-axis stepper motor, a Y-axis stepper motor, a Z-axis stepper motor and a guide rail. The X, Y and Z-axis stepping motors drive the X, Y and Z-axis directions, respectively. The guide rail guides the instrument holder 30 in the X, Y and Z-axis directions in accordance with the drive of each motor. This driving mechanism 33 can detect the position in each dimension.

A micromanipulator operation unit 32 comprises a joystick. This joystick can be inclined 36 degrees to the vertical, and controls the transfer (X and Y directions) of the micromanipulator.

On top of the joystick is a rotary dial. By operating this rotary dial, the height (Z-axis direction) of the micromanipulator can be controlled. The micromanipulator operation unit 32 comprises a key switch for switching between a manual mode and a PC control mode. In the manual mode, the joystick controls the micromanipulator. In the PC control mode, the micromanipulator is controlled by signals received from the computer 100 connected to the micromanipulator operation unit 32.

The computer 100 comprises a storage device 101, memory 105, a central processing unit (CPU) 102, an input device 103, a communication device 104, image display memory 112 and an image processing board 110.

The storage device 101 and memory 105 store programs and control data for performing a variety of system operations and processes. The CPU 102 performs image processing. CPU performs other processes, too. The input device 103, a mouse, a keyboard and the like are used. The communication device 104 communicates instruction to the microscope to rotate the revolver, to transfer the specimen stage 5 and the like, and the micromanipulator unit to transfer in the X, Y and Z-axis directions and the like. The microscope control unit 19 receives a variety of instructions from the communication device 104 of the computer 100 and controls each corresponding component of the microscope (such as a transfer of the specimen stage 5 in the X, Y or Z-axis direction).

The image processing board 110 digitizes analog image data, JPEG-compresses image data and stores it, as described above. The stored digital image data is transferred to the image display memory 112 and is displayed on the image monitor 113.

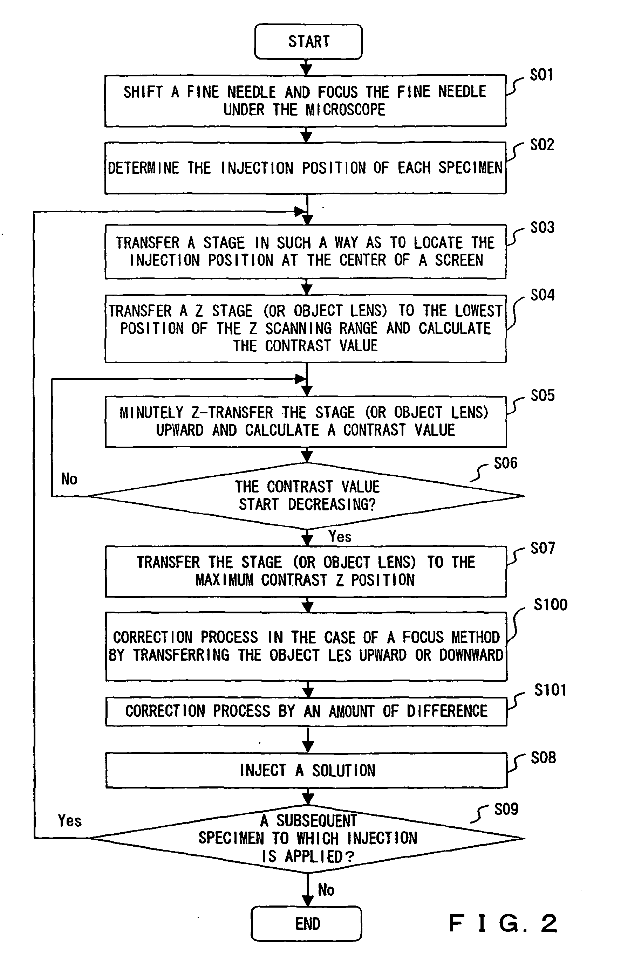

Fig. 2 is the process flow of this preferred embodiment. In Fig. 2, in order to inject a solution at the simultaneously height where a specimen and a fine needle are focused, the position at which the fine needle is focused is stored as the reference position in the manipulator driving. Thus, the fine needle can be repositioned to the focused position at the time of injection. Specimen height is automatically adjusted in such a way that the contrast value of a microscope image is maximized by controlling the height of the specimen. The process of this preferred embodiment is described below with reference to the drawings.

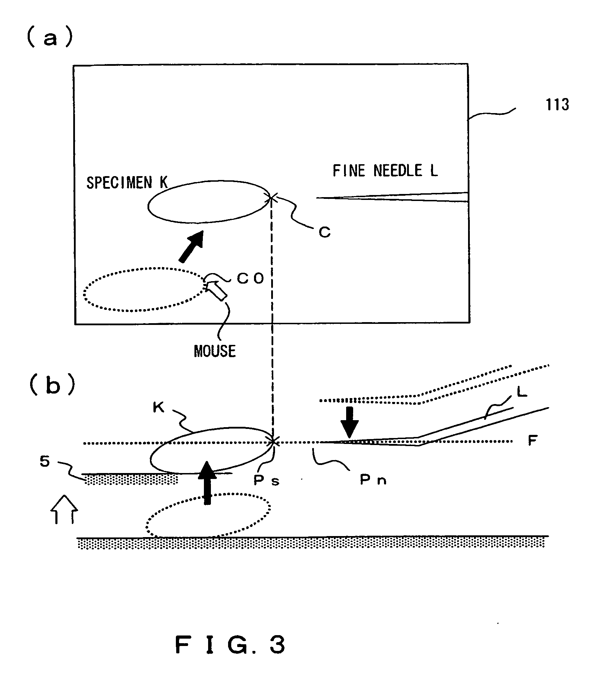

Fig. 3 explains the respective focusing processes of a specimen and a fine needle in this preferred embodiment. Firstly, a fine needle L is horizontally transferred by the driving mechanism 33 of the micromanipulator, and as shown in Fig. 3(a), the tip of the fine needle L is almost located close to the center of a microscopic image displayed on the image monitor 113.

The fine needle L is transferred in the Z-axis direction by the driving mechanism 33 of the micromanipulator while observing the microscope image to focus the tip of the fine needle. In this case, the vertical position of the tip of the needle transfers to plane the plane of F as shown in Fig. 3B. The XYZ -coordinate value of the micromanipulator driving mechanism 33 in the focused position Pn of the fine needle, obtained here is stored as a reference position (S01). Thus, the position Pn of the fine needle L, obtained here can be reproduced when a solution is injected into a specimen.

Then, as shown in Fig. 3(a), on the microscope image displayed on the image monitor 113, a mouse cursor is transferred to a position C0 where the fine needle L is inserted into a specimen K (hereinafter called an "injection position"), and the position C0 is specified by clicking the mouse. The CPU 102 acquires coordinate data displayed on the image monitor 113 of the position C0 and converts the data into the coordinate data of the stage 5 (S02). In this case, if there is a plurality of specimens spread over a wide area, it is efficient to firstly photograph the entire image at low magnification and to collectively specify the plurality of specimens displayed on the image. Then, the driving mechanism 33 of the micromanipulator retreats the fine needle before the stage 5 transfers.

The stage 5 is transferred on the XY plane in such a way that the injection position C0 of the specimen specified in S02 may be located at the center C of the microscope image, using the XY coordinates data converted in S02 (S03).

Then, the height of the stage 5 is adjusted so that the height of the specimen is coplanar with the plane of focus F. For that purpose, a focused position where the contrast of the microscope is maximized is calculated. The contrast evaluation equation (1) which is made up of microscope image data is used for the quantitative evaluation of the contrast to be described below.

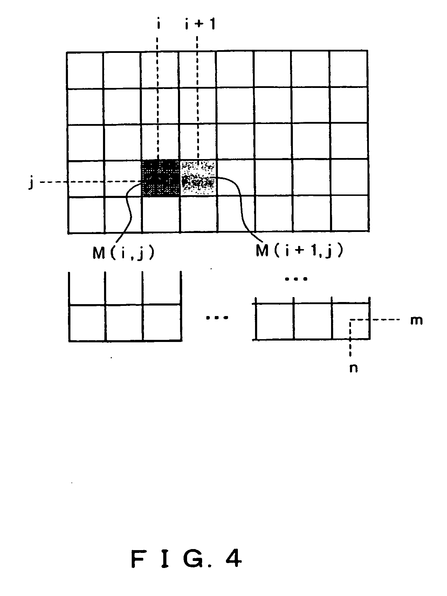

Fig. 4 explains the calculation of the contrast value in this preferred embodiment. A contrast value is obtained by multiplying a plurality of differences in luminance value between two pixels of adjacent image data on the same scanning line and summing them across the entire microscope image. It is determined that the higher this contrast value is, the higher the contrast. In Fig. 4, there is a microscope image made up of n x m pixels, and the difference in luminance value M between adjacent pixels (i, j) and (i+1, j) of them is |M(i, j) - M(i+1, j)|. Therefore, a plurality of these differences are multiplied and summed up across the entire microscope image, the following contrast evaluation equation is obtained (in the following equation (1), N= positive number and f=contrast value).

$$ f = \sum_{i,j=0}^{i=n-1, j=m} \{(M(i, j) - M(i+1, j)\}^{2N} \qquad (1) $$

A focused position is searched for by gradually Z-transferring the stage 5 (transferring the stage 5 in the Z-axis direction (optic axis direction), hereinafter the same applies) while calculating a contrast value f in a predetermined search range, and a position where the contrast value becomes the maximum value is detected. Firstly, the stage 5 is transferred to the lowest position in the Z-axis direction search range, a contrast value f is calculated according to equation (1), and the value is specified as an initial contrast value (S04).

Then, the stage 5 is minutely transferred upward (in the Z-axis direction) and a contrast value is calculated (S05). In this case, an optimal displacement ΔZ is predetermined based on the depth of focus of the object lens or the like with respect to the focused position detection. After the stage 5 is minutely transferred, a contrast value is calculated at the Z position (position (coordinates) at which the stage 5 stops in the Z-axis direction, hereinafter the same applies) as in S04.

Then, the contrast value is compared with the contrast value of the previous Z position (the initial value in the first time) (S06). In this preferred embodiment, the stage 5 is stopped at each interval of height and a contrast value is evaluated. However, alternatively, a particular specimen is transferred at a specific speed and two contrast values of image data obtained at specific times can be evaluated.

If in S06, the contrast value is larger than the previous value, it is determined that a focused position has not get been reached and the process returns to S05. If in S06, the contrast value is smaller than the previous value, it is determined that the previous value is the maximum contrast value, the position is determined to be a focused position Ps (Ps is the Z position of the stage 5) and the stage 5 is returned to the previous Z position (S07). Then, after the transfer of the stage 5 terminates, the fine needle retreated by the driving mechanism 33 of the micromanipulator is returned to the reference position Pn.

After the focus position Ps of a specimen is detected thus, the fine needle L is inserted into the specimen K and an injection process is performed (508). A fine needle is transferred in the X direction using the driving mechanism 33 of the micromanipulator and is inserted in the specimen. Then, an injection process starts. Then, it is determined whether there is a subsequent specimen into to which injection is applied (S09). If there is an unprocessed specimen, the process returns to 503, and S03 through S09 are executed as described above. The processes are repeated until they are applied to all specimens.

In a system having a configuration in which a specimen is focused by Z-transferring the object revolver 4, the following correction is made (S100). In this case, if the object revolver 4 is Z-transferred as the focus process of a specimen (in this case, in S04, S05 and 507, the object revolver 4 is Z-transferred), the plane of focus Pn of the fine needle L is transferred. Therefore, by correcting the height by transferring the fine needle in the Z direction by a distance the same as the Z-transfer of the object revolver 4 when a specimen is focused, the same effect can be obtained.

If the injection position of a specimen (position where a fine needle is inserted into a specimen) is different from the focus position of the specimen due to the thickness of the specimen, the difference can also be stored and this difference can also be corrected for (S101). As to such a specimen, the Z position of a fine needle can be corrected by storing this difference in advance (this difference can be calculated theoretically or experimentally obtained) for each type of specimen. Alternatively, the difference can be determined for each type of the specimen, depending on the size of the specimen and the surrounding environment (including factors such as temperature, humidity, pressure, composition; air, inert gas current, type or density of a culture solution, etc.).

As described above, S01 is only applied when the position Pn deviates due to the exchange of a fine needle or when the coordinates of the position Pn are cleared due to the restart of the device.

In this preferred embodiment, the contrast state of a microscope image for the focus process of a specimen is used. However, it is not limited to this method, and focus can also obtained using infrared red laser or the like. Specifically, a specimen is irradiated with an infrared lasers or the like, and focus can be formed on a specimen, a specimen container or the like, by a method for measuring the intensity of reflected light and detecting its focus position. If focus is formed on the container, the injection position must be determined taking the thickness of the specimen into consideration. The method of detecting the intensity of reflected light is faster than the above-mentioned method for detecting contrast, and accordingly, the process time can be shortened.

Thus, since the vertical position of an injection position can be automatically adjusted, the micromanipulator can automatically and collectively operate on a plurality of specimens each with a different height. A position where an image has a maximum contrast value can also be specified as a focus position. The difference can be corrected at any time according to the type or the like of specimen. The method of detecting the intensity of reflected light can also be used.

As described above, according to this preferred embodiment, the height of a specimen and the height of an injection needle can be automatically adjusted. Therefore, the operability of the injection process can be improved and also its process time can be reduced.

<The second preferred embodiment>

In this preferred embodiment, if there are many specimens each with a different height, in order to accurately adjust the height of the injection position of a specimen, the height is controlled by the focus process so that the contrast value of the image data may become the maximum around the injection position of a specimen. Specifically, although in the first preferred embodiment, a position where the contrast value of the entire microscope image becomes the maximum is specified as a focus position, in this preferred embodiment, a position where the contrast value in a prescribed range of a microscope image is specified as a focus position.

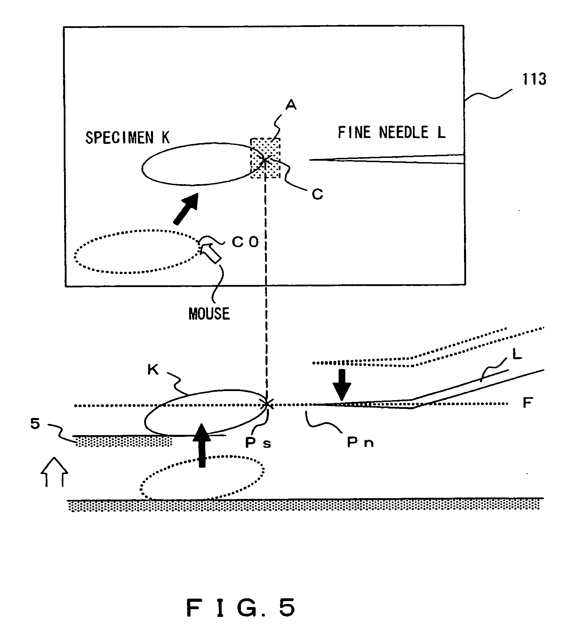

Fig. 5 shows an area A whose center is an injection position, in the second preferred embodiment. In this preferred embodiment, the contrast of image data in an area A including an injection position C (injection position on the XY-plane) is obtained and a focus position is calculated based on the contrast.

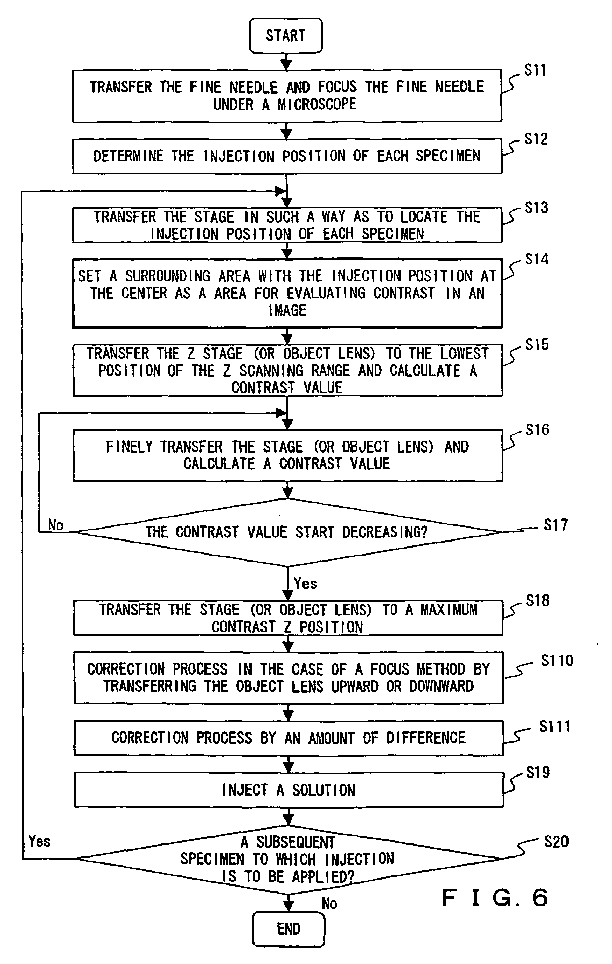

Fig. 6 shows the process flow of the second preferred embodiment. The processes in S11 through S13 until transferring the position where a fine needle is inserted into a specimen to the center of the screen after specifying an injection position are the same as those in S01 through S03 of Fig. 2.

The height of a point C of a specimen, where a injection process is performed, is as adjusted to that of a focus plane F. For that purpose, image data in a surrounding area A (for example, a square area whose two vertical and horizontal sides are approximately 100 pixels) whose center is the injection position C (injection position in the XY-coordinate system) is extracted (S14).

After that, a focus position where the contrast of the image data in the area A extracted in S14 becomes the highest is acquired for each specimen. The injection process in S15 through S20 after that is the same as that in S04 through S09 of Fig. 2.

In a system where the object revolver 4 Z-transfers, the object revolver 4 is Z-transferred in step S15, S16 and S18.

Correction processes S110 and S111 are the same as S100 and S102 shown in Fig. 2, respectively.

As described above, by calculating the contrast value of a prescribed image area of a microscope image, resources, such as CPU, memory and the like, can be effectively utilized, and accordingly, process speed can be improved.

As described above, according to this preferred embodiment, even when an injection process is applied to many specimens each with different height, height adjustment for each specimen can be automated. Accordingly, the operability of the injection process can be improved, and process time can be shortened.

<The third preferred embodiment>

In this preferred embodiment, a contrast value is calculated before starting focus processes for each specimen. If this value is larger than a preset value, the injection process is performed without a focus process. Specifically, if the contrast value is larger than a specified value, the Z position is regarded as a focus position and the injection process is performed.

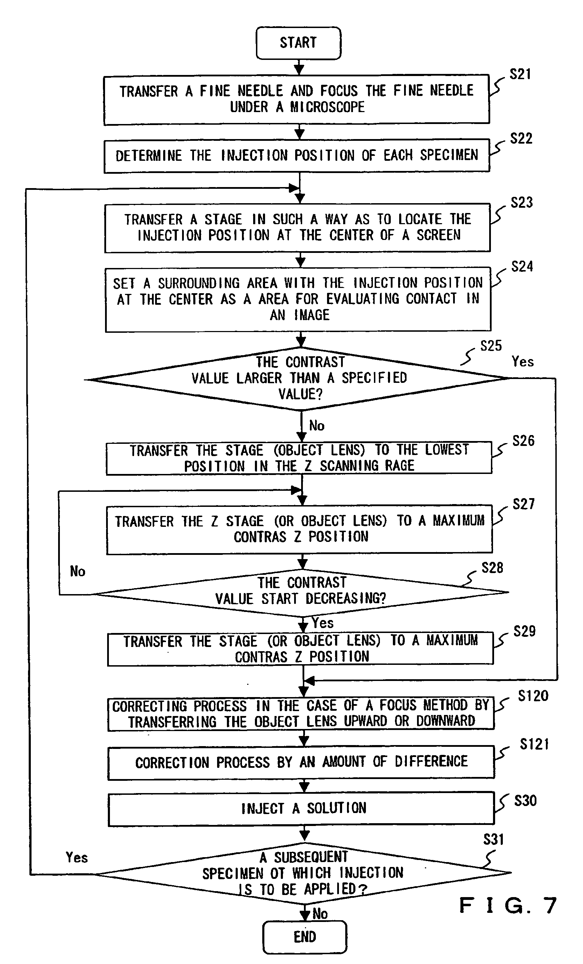

Fig. 7 shows the process flow of the third preferred embodiment. The processes in S21 through S24 until transferring the position of a specimen where the fine needle is placed at the center of a screen and specifying an area to which contrast evaluation is applied after specifying an injection position are the same as those in S11 through S14 of Fig. 6.

The contrast value in the area A set in step S24 is calculated, and is compared with a preset specification value (S25). In this case, the specification value can be determined based on an actual contrast value in the focus position obtained in an experiment or can be determined based on the ratio of the contrast value of the focus position in the first specimen.

In this case, if the calculated contrast value is smaller than the specification value, it is determined that the current Z position is still far away from the focus position, and the focus position detection processes of S26 through S29 is performed. This focus position detection process is the same as that in S15 through S18 of Fig. 6.

If the calculated contrast value is larger than the specification value, it is determined that the contrast of the image is located in the vicinity of the focus position since it is high, and an injection process is performed in step S30 without executing the focus position detection processes of S26 through S29. S23 through S30 are repeated until all specimens have been processed (S31).

In a system where the object revolver 4 Z-transfers, the object revolver 4 is Z-transferred in S26, S27 and S29.

Correction processes S120 and S121 are the same as those in S100 and S101, respectively, of Fig. 2.

Thus, by regarding all positions with a value equal to or larger than the threshold as focus positions, process speed can be improved.

As described above, according to this preferred embodiment, when transferring to a specimen with almost the same height, the injection process can be performed without a focus operation, and process time can be further shortened compared to the first preferred embodiment.

<The fourth preferred embodiment>

This preferred embodiment simultaneously performs an operation to transfer an injection position to the center of a screen for each specimen and a focus process.

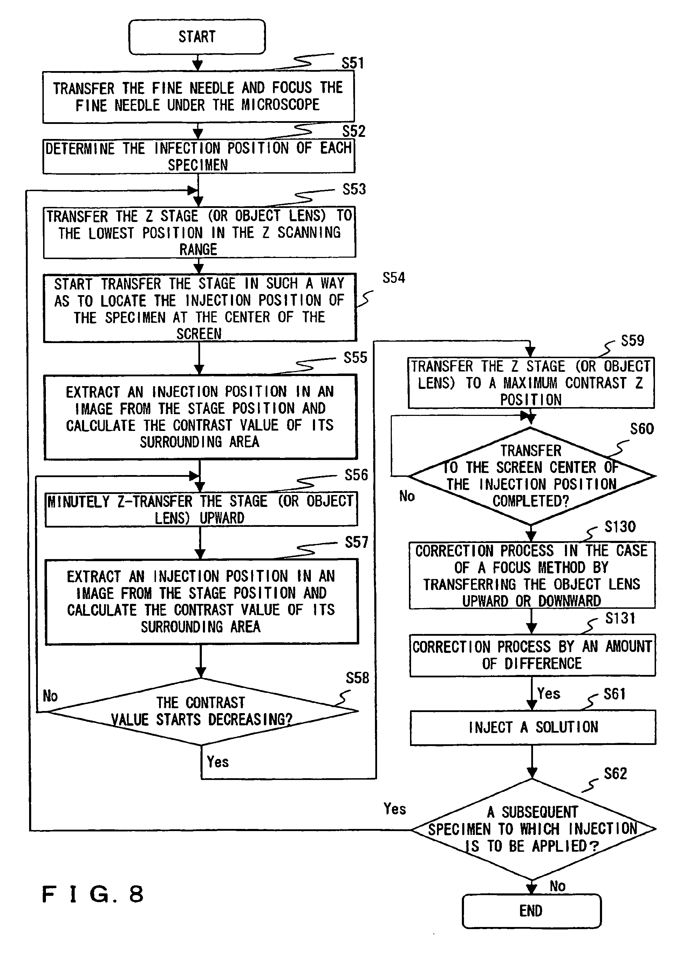

Fig. 8 shows the process flow of the fourth preferred embodiment. Processes of S51 and S52 until determination of the injection position of each specimen are the same as those of S11 and S12 of Fig. 6. The stage 5 is transferred to the lowest position in the Z-axis direction (S53).

The transfer starts in such a way that an injection position is located at the center of the screen (554).

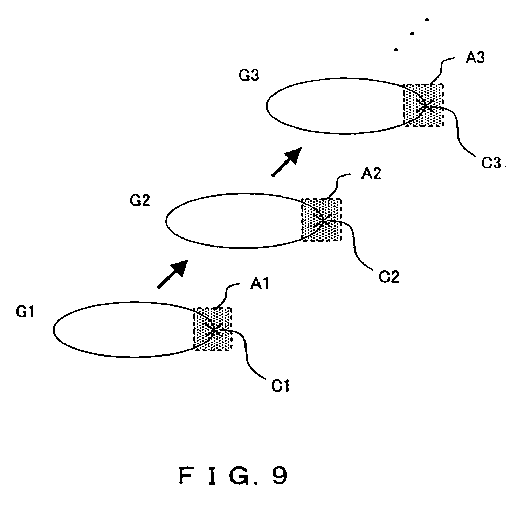

Fig. 9 shows the process in which an injection position C and its surrounding area A change their positions according to the transfer of the stage 5 when a specimen K mounted on the stage 5 is transferred in the direction of the arrows. In Fig. 9, the injection position C is transferred to C1, C2, C3 and so on. The surrounding area A transfers to A1, A2, A3 and so on.

During the transfer of the stage 5, the coordinates of the stage 5 are detected in real time, and the injection position on a displayed image is calculated based on the coordinate values. G1, G2 and G3 shown in Fig. 9 are the positions of a specimen in each focus process performed due to the transfer of the stage 5. In this case, in the first focus process when a specimen is located at stage position G1, the coordinates of injection position C1 are obtained.

Surrounding area A1 whose center is position C1, is specified as an area whose contrast value is calculated. A contrast value is calculated based on the image data of this specified area A1 (S55).

The stage 5 is minutely transferred upward (in the Z-axis direction) (S56). The current stage position G2 is detected. Injection position C2 in a microscopic image is extracted. The contrast value of surrounding area A2 is calculated (S57).

In this case, injection position C2 can be calculated using the coordinates of injection position C1 and the displacement of the stage 5. The range of the coordinates indicating surrounding area A2 is also obtained, and surrounding area A2 in the current microscope image, corresponding to the range of these coordinates are obtained. Then, a contrast value is calculated based on the surrounding area A2 of the appropriate microscope image. The respective contrast values of the surrounding area A1 in the previous microscope image (image at stage position G1) and the surrounding area A2 in the current microscope image are compared (S58).

If in S58, the contrast value is larger than the previous value, the process returns to S56, and the new coordinates G3 of the stage 5 are detected. Injection position C3 is calculated in a displayed image. After surrounding area A3 is set again, the contrast value on surrounding area A3 is calculated.

If in S58, the contrast value is smaller than the previous one, the contrast value of the previous position is determined to be the maximum. Therefore, it is determined that the previous stage position is a focus position, and the position is reset to the previous Z position (S59). The completion of the transfer in the horizontal direction of the stage 5 is awaited (S60).

Correction processes S130 and S131 are the same as S100 and S101, respectively, shown in Fig. 2.

When the transfer of the stage 5 is completed and the focus position of a specimen is detected, a fine needle is inserted into the specimen and a injection process is performed (S61). Furthermore, it is determined whether there is a subsequent specimen into to which injection is applied (S62). If there is another specimen, the process returns to S53. If there is no specimen, the process terminates.

In a system where the object revolver 4 Z-transfers, the object revolver 4 is Z-transferred in S53, S56 and S59.

Thus, in this preferred embodiment, as the stage 5 is transferred on the XY plane, the coordinates to be acquired from each microscopic image differ. However, since the area to be extracted (surrounding an injection position) is the same, an image is always extracted from the surrounding of the injection position.

As described in the above-mentioned sequence of events, by tracing the coordinates of an injection position obtained in S52 (calculating an injection position using the coordinates and the amount of displacement of the stage 5), it can be detected at which coordinates of a microscope image photographed after the transfer of the stage 5 is located an injection position. If an area to extract can be specified, the process after that is the same as in the second preferred embodiment.

Thus, the horizontal transfer of an object and the accurate focus process of the specific part of the object (specimen) can be simultaneously performed.

As described above, according to this preferred embodiment, stage transfer for locating the injection position of a specimen at the center of a screen and a focus process can be simultaneously performed, and accordingly, injection process time can be shortened.

According to the present invention, a micro manipulation can be applied to many specimens accurately and for a short time, and accordingly, the operability of the micromanipulator is improved.

**Claims**

1. A micromanipulation system of a microscope for applying a micro injection to a plurality of objects having different heights within the view of the microscope, using a fine needle, comprising:

    an injection driving means (33) for transferring the fine needle at least along the optic axis direction of the microscope,
    an injection starting position determining means for determining the injection starting position, from which an injection starts, using a position, on which the tip of the fine needle is focused by an objective lens, as a reference position,
    an object transfer means (5) for relatively transferring the respective positions of the object and objective lens along the optical axis direction of the microscope,
    an injection position setting means for setting an injection position for each of the objects included within the view of the microscope,
    a focus position detecting means (34, 100) for detecting a focus position indicating the focus of the object by the objective lens for each of the injection positions of the objects set by the injection position setting means, in accordance with the relative transfer of the object by the object transfer means,
    an object transfer control means (19) for controlling a movement of the object transfer means, based on each of the focus positions obtained by the focus position detecting means, and
    an injection control means (33) for performing the injection moving and injecting the fine needle in a direction orthogonal to the optic axis for each of the objects in a state where each of the objects is transferred to the focus position corresponding to the injection position of the object using the object transfer control means and the fine needle is transferred to the injection starting position.

2. The micromanipulation system according to claim 1, wherein said focus position detecting means (34, 100) comprises:

    an image acquisition means (34) for acquiring images within the view of the microscope, according to the transfer of the object along the optic axis direction of the microscope;
    a contrast value calculating means (100) for calculating a contrast value indicating the contrast height of the images acquired by the image acquisition means; and
    a maximum contrast value image detecting means (100) for detecting an image whose contrast value is the maximum from a plurality of images acquired by the image acquisition means.

3. The micromanipulation system according to claim 1, further comprising:

    a correction means (100) for correcting the amount of transfer of said object transferring means under the control of said object transfer control means, according to at least one of the type, size and ambient environment of the object.

4. The micromanipulation system according to claim 1, wherein said focus position detecting means detects the strength of the reflected light of light applied to the object.

5. The micromanipulation system according to claim 2, wherein:

    said contrast value calculating means (100) calculates a contrast value in a predetermined area of the image, and the predetermined area is an image area including a photographed area of the part of the object to be micro-manipulated.

6. The micromanipulation system according to claim 2, further comprising:

a comparison means (100) for comparing the contrast value calculated by said contrast value calculating means with a predetermined threshold value,

wherein said maximum contrast value image detecting means (100) detects the maximum contrast value image, based on a result of the comparison by the comparison means.

7. The micromanipulation system according to claim 2, further comprising:

an object horizontal position detecting means (100) for detecting the position of the objects one after another in connection with the transfer of the objects in the horizontal direction, which is perpendicular to the optic axis,

wherein said contrast value calculation means (100) calculates the contrast value in a prescribed area of an object photographed on the image, based on the information of the position detected by said horizontal position detecting means.

8. The micromanipulation system according to claim 1, wherein said micro manipulation starting position determining means determines the micro manipulation starting position by correcting the reference position, based on a difference between the focus position of the object and an actual position of the object applied to be micro-manipulated.

9. The micromanipulation system according to claim 1, wherein when said object transfer means is of an objective lens transfer type, said micro manipulation starting position determining means (33) corrects the reference position, based on the amount of transfer due to the transfer of said object transfer means for the purpose of focusing the object.

10. A computer-readable storage medium on which is recorded a program for enabling a computer to control a micro-manipulation system so as to apply a micro injection to a plurality of objects having different heights within the view of a microscope using a fine needle, said program comprising:

an injection driving process (S01) for transferring the fine needle at least along the optic axis direction of the microscope,
an injection starting position determining process of determining an injection starting position, from which an injection starts, using a position, on which the tip of the fine needle is focused by an objective lens, as a reference position,
an object transfer process (505) of relatively transferring the respective positions of the object and objective lens along the optical axis direction of the microscope,
an injection position setting process for setting an injection position for each of the objects included within the view of the microscope,
a focus position detecting process (S05, 506) of detecting a focus position indicating the focus of the object by the objective lens for each of the injection positions of the objects set by the injection position setting process in accordance with the relative transfer of the object by the object transfer means,
an object transfer control process (S07) of controlling a movement of the object transfer means, based on each of the focus positions obtained by the focus position detecting process, and
an injection control process (S08) for performing the injection for moving and injecting the fine needle in a direction orthogonal to the optical axis for each of the objects in a state where each of the objects is transferred to the focus position corresponding to the injection position of the object by using the object transfer control process and the fine needle is transferred to the injection starting position.

11. The computer-readable storage medium according to claim 10, wherein said focus position detection process (505, 506) comprises:

an image acquisition process of acquiring images within the view of the microscope, according to the transfer of the object in the optic axis direction of the microscope;
a contrast value calculating process of calculating a contrast value indicating the contrast height of the images acquired in the image acquisition process; and
a maximum contrast value image detecting process of detecting an image whose contrast value is the maximum from a plurality of images acquired in the image acquisition process.

12. The computer-readable storage medium according to claim 11, further comprising:

a comparison process (S25) of comparing the contrast value calculated in said contrast value calculating process with a predetermined threshold value,

wherein said maximum contrast value image detecting process detects the maximum contrast value image, based on a result of the comparison in the comparison process.

13. The computer-readable storage medium according to claim 11, further comprising:

an object horizontal position detecting process (S53-S62) of detecting the position of the objects one after another in connection with the transfer of the objects in the horizontal direction, which is perpendicular to the optic axis of the microscope,

wherein said contrast value calculation process calculates the contrast value in a prescribed area of an object photographed in the image, based on the information of a position detected in said horizontal position detecting process.

14. A micromanipulation system control method for applying an injection to a plurality of objects having different heights within the view of a microscope using a fine needle, comprising:

transferring the fine needle along the optic axis direction of the microscope (S01);
determining an injection starting position, which is the optical axis direction position of the fine needle that starts the injection, using an optical axis direction position on which the tip of the fine needle is focused by an objective lens as a reference position;
setting an injection position for each of the objects included within the view of the microscope;
detecting a focus position indicating a position on which the object is focused by the objective lens (S05) for each of the injection positions of the objects set by the injection position setting step;
relatively transferring the respective positions of the object and the objective lens position along the optical axis direction of the microscope based on the result of the detection, and focusing the object on the objective lens (505, S06, S07);
transferring the fine needle to the injection starting position; and
performing and controlling the injection (S08) for each of the objects in a state where each of the objects is transferred to the focus position corresponding to the injection position of the object.

15. The method according to claim 14, wherein said detection process comprises:

acquiring images within the view of the microscope, according to the transfer of the object along the optic axis direction of the microscope;
calculating a contrast value indicating the contrast height of the image (S05); and
detecting an image whose contrast value is the maximum from a plurality of acquired images (S06).

16. The method according to claim 15, further comprising:

detecting the position of the objects one after another in connection with the transfer of the object in a direction perpendicular to the optic axis of the microscope (S53-S62),

wherein the contrast value in a predetermined area of an object photographed on the image is calculated based on the information of the detected position.

**Patentansprüche**

1. Mikromanipulationssystem eines Mikroskops zum Einbringen einer Mikroinjektion in eine Mehrzahl Objekte mit verschiedener Höhe innerhalb des Sehfeldes des Mikroskops unter Verwendung einer feinen Nadel, aufweisend:

ein Injektionsantriebsmittel (33) für die Bewegung der feinen Nadel zumindest in Richtung der optischen Achse des Mikroskops;

ein Bestimmungsmittel für die Injektionsstartposition zur Bestimmung der Startposition der Injektion, ab der eine Injektion beginnt, unter Verwendung einer Position als Referenzposition, in der die Spitze der feinen Nadel von einer Objektivlinse scharf eingestellt wird;

ein Objektverschiebemittel (5) zur relativen Verschiebung der jeweiligen Positionen des Objekts und der Objektivlinse in Richtung entlang der optischen Achse des Mikroskops;

ein Einstellmittel für die Injektionsposition zum Einstellen einer Injektionsposition für jedes der im Sichtfeld des Mikroskops befindlichen Objekte;

ein Detektionsmittel (34, 100) für die Fokusposition, zum Detektieren einer Fokusposition, die den Fokus des Objekts durch die Objektivlinse für jede der Injektionspositionen der Objekte, die vom Einstellmittel für die Injektionsposition gemäß der relativen Bewegung des Objekts durch das Objektverschiebemittel eingestellt worden ist, angibt;

ein Steuermittel (19) für die Objektverschiebung, um die Bewegung des Objektverschiebemittels auf Basis jeder der Fokuspositionen zu steuern, die vom Detektionsmittel für die Fokusposition erhalten werden; und

ein Steuermittel (33) für die Injektion zur Ausführung der Injektionsbewegung, das die feine Nadel in Richtung senkrecht zur optischen Achse für jedes der Objekte in einem Zustand bewegt und injiziert, in dem jedes der Objekte zur Fokusposition entsprechend der Injektionsposition des Objekts unter Verwendung des Steuermittels für die Objektverschiebung verschoben und die feine Nadel in die Startposition für die Injektion bewegt wird.

2. Mikromanipulationssystem nach Anspruch 1, bei dem das Detektionsmittels (34, 100) für die Fokusposition aufweist:

ein Bilderfassungsmittel (34) zum Erfassen von Bildern innerhalb des Sehfeldes des Mikroskops gemäß der Verschiebung des Objekts in Richtung entlang der optischen Achse des Mikroskops;

ein Kontrastwert-Berechnungsmittel (100) zur Berechnung eines Kontrastwertes, der die Kontrasthöhe der vom Bilderfassungsmittel erfassten Bilder angibt; und

ein Detektionsmittel (100) für das Bild mit dem maximalen Kontrastwert, um ein Bild zu detektieren, dessen Kontrastwert das Maximum einer Mehrzahl Bilder ist, die vom Bilderfassungsmittel erfasst worden sind.

3. Mikromanipulationssystem nach Anspruch 1, ferner aufweisend:

ein Korrekturmittel (100) zum Korrigieren der Verschiebestrecke des Objektverschiebemittels unter der Steuerung des Objektverschiebesteuermittels gemäß mindestens entweder des Typs, der Größe und der Umgebungsbedingungen des Objekts.

4. Mikromanipulationssystem nach Anspruch 1, bei dem das Detektionsmittel für die Fokusposition die Stärke des reflektierten Lichtes von Licht detektiert, das auf das Objekt fällt.

5. Mikromanipulationssystem nach Anspruch 2, bei dem:

das Kontrastwert-Berechnungsmittel (100) einen Kontrastwert in einem vorgegebenen Bereich des Bildes berechnet; und

der vorgegebene Bereich ein Bildbereich ist, der einen fotografierten Bereich des Teils des zu mikromanipulierenden Objekts enthält.

6. Mikromanipulationssystem nach Anspruch 2, ferner aufweisend:

ein Vergleichsmittel (100) zum Vergleichen des vom Kontrastwert-Berechnungsmittel berechneten Kontrastwertes mit einem vorgegebenen Schwellenwert,

wobei das Detektionsmittel (100) für das Bild mit dem maximalen Kontrastwert den maximalen Kontrastwert eines Bildes auf Basis des Vergleichsergebnisses vom Vergleichsmittel detektiert.

7. Mikromanipulationssystem nach Anspruch 2, ferner aufweisend:

ein Detektionsmittel (100) für die horizontale Position der Objekte zur aufeinander folgenden Detektion der Position der Objekte in Zusammenhang mit dem Verschieben der Objekte in waagrechter Richtung, die senkrecht zur optischen Achse steht;

wobei das Kontrastwert-Berechnungsmittel (100) den Kontrastwert in einem vorgeschriebenen Bereich eines auf dem Bild fotografierten Objektes auf Basis von Informationen über die vom Detektionsmittel für die horizontale Position detektierte Position berechnet.

8. Mikromanipulationssystem nach Anspruch 1, bei dem das Bestimmungsmittel für die Mikromanipulations-Startposition die Mikromanipulations-Startposition bestimmt, indem die Referenzposition auf Basis einer Differenz zwischen der Fokusposition des Objekts und der tatsächlichen Position des zu mikromanipulierenden Objekts korrigiert wird.

9. Mikromanipulationssystem nach Anspruch 1, bei dem das Objektverschiebemittel ein Objektivlinsen-Verschiebetyp ist, wobei das Bestimmungsmittel (33) für die Mikromanipulations-Startposition die Referenzposition auf Basis des Verschiebeweges durch die Bewegung des Objektverschiebemittels zum Zweck der Scharfeinstellung des Objekts korrigiert.

10. Computerlesbares Speichermedium, auf dem ein Programm aufgezeichnet ist, das es einem Computer ermöglicht, ein Mikromanipulationssystem so zu steuern, dass eine Mikroinjektion in eine Mehrzahl Objekte mit verschiedener Höhe im Sehfeld eines Mikroskops mittels einer feinen Nadel eingebracht wird, wobei das Programm aufweist:

einen Injektionsantriebsprozess (S01), um die feine Nadel zumindest in Richtung entlang der optischen Achse des Mikroskops zu bewegen;
einen Bestimmungsprozess für die Injektionsstartposition zur Bestimmung der Injektionsstartposition, ab der eine Injektion beginnt, unter Verwendung einer Position als Referenzposition, in der die Spitze der feinen Nadel von einer Objektivlinse scharf eingestellt wird;
einen Objektverschiebeprozess (S05) zum relativen Verschieben der entsprechenden Positionen des Objekts und der Objektivlinse in Richtung entlang der optischen Achse des Mikroskops;
einen Injektionspositions-Einstellprozess zum Einstellen einer Injektionsposition für jedes der Objekte innerhalb des Sehfeldes des Mikriskops;
einen Fokuspositions-Detektionsprozess (S05, S06) zum Detektieren einer Fokusposition, die den Fokus des Objekts durch die Objektivlinse für jede der Injektionspositionen der Objekte, die vom Einstellprozess für die Injektionsposition gemäß der relativen Bewegung des Objekts durch das Objektverschiebemittel eingestellt worden ist, angibt;
einen Objektverschiebe-Steuerprozess (S07) zur Steuerung der Bewegung des Objektverschiebemittels auf Basis jeder der Fokuspositionen, die im Fokuspositions-Detektionsprozess erhalten wurden; und
einen Injektionssteuerprozess (S08) zur Ausführung der Injektion, um die feine Nadel in Richtung senkrecht zur optischen Achse für jedes der Objekte in einem Zustand zu bewegen und zu injizieren, in dem jedes der Objekte zur Fokusposition entsprechend der Injektionsposition des Objekts unter Verwendung des Steuerprozesses für die Objektverschiebung verschoben und die feine Nadel in die Startposition für die Injektion bewegt wird.

11. Computerlesbares Speichermedium nach Anspruch 10, bei dem der Fokuspositions-Detektionsprozess (S05, S06) aufweist:

einen Bilderfassungsprozess zum Erfassen von Bildern innerhalb des Sehfeldes des Mikroskops gemäß der Verschiebung des Objekts in Richtung der optischen Achse des Mikroskops;
einen Kontrastwert-Berechnungsprozess zum Berechnen eines Kontrastwertes, der die Kontrasthöhe der im Bilderfassungsprozess erfassten Bilder angibt; und
einen Detektionsprozess für den maximalen Kontrastwert eines Bildes zum Detektieren eines Bildes, dessen Kontrastwert das Maximum einer Mehrzahl Bilder ist, die im Bilderfassungsprozess erfasst worden sind.

12. Computerlesbares Speichermedium nach Anspruch 11, ferner aufweisend:

einen Vergleichsprozess (S25) zum Vergleichen des im Kontrastwert-Berechnungsprozess berechneten Kontrastwertes mit einem vorgegebenen Schwellenwert;

wobei der Detektionsprozess für den maximalen Kontrastwert eines Bildes das Bild mit dem maximalen Kontrastwert auf Basis des Vergleichsergebnisses im Vergleichsprozess detektiert.

13. Computerlesbares Speichermedium nach Anspruch 11, ferner aufweisend:

einen Detektionsprozess (S53 bis S62) für die horizontale Position der Objekte zur aufeinander folgenden Detektion der Position der Objekte in Zusammenhang mit dem Verschieben der Objekte in waagrechter Richtung, die senkrecht zur optischen Achse des Mikroskops steht;

wobei der Kontrastwert-Berechnungsporzess den Kontrastwert in einem vorgeschriebenen Bereich eines auf dem Bild fotografierten Objektes auf Basis von Informationen über die vom Detektionsmittel für die horizontale Position detektierte Position berechnet.

14. Steuerungsverfahren für ein Mikromanipulationssystem zum Einbringen einer Injektion in eine Mehrzahl Objekte mit verschiedener Höhe innerhalb des Sehfeldes des Mikroskops unter Verwendung einer feinen Nadel, aufweisend:

Bewegen der feinen Nadel in Richtung entlang der optischen Achse des Mikroskops (S01);
Bestimmen der Startposition der Injektion, bei der es sich um die Position in Richtung der optischen Achse handelt, wo die feine Nadel die Injektion beginnt, unter Verwendung einer Position in Richtung der optischen Achse als Referenzposition, in der die Spitze der feinen Nadel von einer Objektivlinse scharf eingestellt ist;
Einstellen einer Injektionsposition für jedes der Objekte innerhalb des Sehfeldes des Mikroskops;
Detektieren der Fokusposition, die eine Position angibt, in der das Objekt durch die Objektivlinse scharf eingestellt ist (S05), für jede der im Schritt der Einstellung der Injektionsposition eingestellten Injektionspositionen;
relatives Verschieben der jeweiligen Positionen des Objekts und der Objektivlinsenposition in Richtung entlang der optischen Achse des Mikroskops auf Basis des Detektionsergebnisses und Scharfeinstellen des Objekts durch die Objektivlinse (S05, S06, S07);
Bewegen der feinen Nadel in die Injektionsstartposition; und
Ausführen und Steuern der Injektion (S08) für jedes der Objekte in einem Zustand, in dem jedes der Objekte entsprechend der Injektionsposition des Objekts in die Fokusposition bewegt wird.

15. Verfahren nach Anspruch 14, bei dem der Detektionsprozess aufweist:

Erfassen von Bildern innerhalb des Sehfeldes des Mikroskops gemäß der Verschiebung des Objekts in Richtung entlang der optischen Achse des Mikroskops;
Berechnen eines Kontrastwertes, der die Kontrasthöhe des Bildes angibt (S05); und
Detektieren eines Bildes, dessen Kontrastwert das Maximum aus einer Mehrzahl erfasster Bilder ist (S06).

16. Verfahren nach Anspruch 15, ferner aufweisend:

aufeinander folgendes Detektieren der Position der Objekte in Zusammenhang mit dem Verschieben des Objekts in Richtung senkrecht zur optischen Achse des Mikroskops (S53 bis S62);

wobei der Kontrastwert in einem vorgegebenen Bereich eines auf dem Bild fotografierten Objektes auf Basis von Informationen über die detektierte Position berechnet wird.

**Revendications**

1. Système de micro-manipulation d'un microscope destiné à appliquer une micro-injection à une pluralité d'objets ayant des hauteurs différentes dans le champ de vision du microscope, au moyen d'une fine aiguille, comprenant :

un moyen (33) de pilotage d'injection, destiné à transférer la fine aiguille au moins selon la direction de l'axe optique du microscope,
un moyen de détermination de la position de début de l'injection, destiné à déterminer la position de début de l'injection, à partir de laquelle commence une injection, au moyen d'une position sur laquelle le bout de la fine aiguille est focalisé par une lentille de focalisation, en tant que position de référence,
un moyen (5) de transfert d'objet destiné à transférer de façon relative les positions respectives de l'objet et de la lentille de focalisation selon la direction de l'axe optique du microscope,
un moyen de réglage de la position d'injection destiné à régler une position d'injection pour chacun des objets inclus dans le champ de vision du microscope,
un moyen (34, 100) de détection de position de focalisation destiné à détecter une position de focalisation indiquant la focalisation de l'objet par la lentille de focalisation pour chacune des positions d'injection des objets réglées à l'aide du moyen de réglage de position d'injection, en conformité avec le transfert relatif de l'objet par le moyen de transfert d'objet,

un moyen (19) de commande de transfert d'objet destiné à commander un mouvement du moyen de transfert d'objet, en se basant sur chacune des positions de focalisation obtenues par le moyen de détection de position de focalisation, et

un moyen (33) de commande d'injection destiné à exécuter le mouvement d'injection et l'injection de la fine aiguille dans une direction orthogonale à l'axe optique pour chacun des objets dans un état dans lequel chacun des objets est transféré à la position de focalisation correspondant à la position d'injection de l'objet à l'aide du moyen de commande de transfert d'objet et la fine aiguille est transférée à la position de début d'injection.

2. Système de micro-manipulation selon la revendication 1, dans lequel ledit moyen (34, 100) de détection de position de focalisation comprend :

un moyen (34) d'acquisition d'image destiné à acquérir des images dans le champ de vision du microscope, en conformité avec le transfert de l'objet selon la direction de l'axe optique du microscope ;

un moyen (100) de calcul de valeur de contraste destiné à calculer une valeur de contraste indiquant l'amplitude du contraste dans les images acquises par le moyen d'acquisition d'image ; et

un moyen (100) de détection d'image à valeur maximale de contraste destiné à détecter une image dont la valeur de contraste est la maximale parmi une pluralité d'images acquises par le moyen d'acquisition d'image.

3. Système de micro-manipulation selon la revendication 1, comprenant en outre :

un moyen (100) de correction destiné à corriger la valeur de transfert dudit moyen de transfert d'objet par commande à l'aide dudit moyen de commande de transfert des objets, en conformité avec au moins l'un parmi le type, la taille et l'environnement ambiant de l'objet.

4. Système de micro-manipulation selon la revendication 1, dans lequel ledit moyen de détection de position de focalisation détecte la force de la lumière réfléchie issue d'une lumière appliquée à l'objet.

5. Système de micro-manipulation selon la revendication 2, dans lequel :

ledit moyen (100) de calcul de valeur de contraste calcule une valeur de contraste dans une zone prédéterminée de l'image, et

la zone prédéterminée est une zone d'image incluant une zone photographiée de la partie de l'objet devant être soumis à la micro-manipulation.

6. Système de micro-manipulation selon la revendication 2, comprenant en outre :

un moyen (100) de comparaison destiné à comparer la valeur de contraste calculée par ledit moyen de calcul de valeur de contraste avec une valeur de seuil prédéterminée,

dans lequel ledit moyen (100) de détection d'image à valeur maximale de contraste détecte l'image à valeur maximale de contraste en se basant sur un résultat de la comparaison par le moyen de comparaison.

7. Système de micro-manipulation selon la revendication 2, comprenant en outre :

un moyen (100) de détection de position horizontale d'objet destiné à détecter la position des objets l'un après l'autre en liaison avec le transfert des objets dans la direction horizontale qui est perpendiculaire à l'axe optique,

dans lequel ledit moyen (100) de calcul de valeur de contraste calcule la valeur de contraste dans une zone imposée d'un objet photographiée sur l'image, en se basant sur l'information de la position détectée par ledit moyen de détection de position horizontale.

8. Système de micro-manipulation selon la revendication 1, dans lequel ledit moyen de détermination de position de début de micro-manipulation détermine la position de début de micro-manipulation par correction de la position de référence, en se basant sur une différence entre la position de focalisation de l'objet et une position réelle de l'objet appliqué devant être soumis à la micro-manipulation.

9. Système de micro-manipulation selon la revendication 1, dans lequel quand ledit moyen de transfert d'objet est du type transfert de lentille de focalisation, ledit moyen (33) de détermination de position de départ de la micro-manipulation corrige la position de référence, en se basant sur la valeur de transfert due au transfert dudit objet par ledit moyen de transfert d'objet dans le but de focalisation de l'objet.

10. Support de mémorisation pouvant être lu par ordinateur, sur lequel est enregistré un programme destiné à permettre à un ordinateur de commander un système de micro-manipulation de manière à appliquer une micro-injection à une pluralité d'objets ayant des hauteurs différentes dans le champ de vision d'un microscope au moyen d'une fine aiguille, ledit programme comprenant :

un processus (S01) de pilotage d'injection destiné à transférer la fine aiguille au moins selon la direction de l'axe optique du microscope,
un processus de détermination de la position de début de l'injection destiné à déterminer une position de début de l'injection, à partir duquel commence une injection, au moyen d'une position sur laquelle le bout de la fine aiguille est focalisé par une lentille de focalisation, en tant que position de référence,
un processus (S05) de transfert d'objet destiné à transférer de façon relative les positions respectives de l'objet et de la lentille de focalisation selon la direction de l'axe optique du microscope,
un processus de réglage de la position d'injection destiné à régler une position d'injection pour chacun des objets inclus dans le champ de vision du microscope,
un processus (S05, S06) de détection de position de focalisation destiné à détecter une position de focalisation indiquant la focalisation de l'objet par la lentille de focalisation pour chacune des positions d'injection des objets réglées à l'aide du processus de réglage de position d'injection, en conformité avec le transfert relatif de l'objet par le moyen de transfert d'objet,
un processus (S07) de commande de transfert d'objet destiné à commander un mouvement du moyen de transfert d'objet, en se basant sur chacune des positions de focalisation obtenues par le processus de détection de position de focalisation, et
un processus (S08) de commande d'injection destiné à exécuter l'injection pour déplacer et injecter la fine aiguille dans une direction orthogonale à l'axe optique pour chacun des objets dans un état dans lequel chacun des objets est transféré à la position de focalisation correspondant à la position d'injection de l'objet à l'aide du processus de commande de transfert d'objet et la fine aiguille est transférée à la position de début d'injection.

11. Support de mémorisation pouvant être lu par ordinateur selon la revendication 10, dans lequel ledit processus (S05, S06) de détection de position de focalisation comprend :

un processus d'acquisition d'image destiné à acquérir des images dans le champ de vision du microscope, en conformité avec le transfert de l'objet selon la direction de l'axe optique du microscope ;
un processus de calcul de valeur de contraste destiné à calculer une valeur de contraste indiquant l'amplitude du contraste dans les images acquises par le processus d'acquisition d'image ; et
un processus de détection d'image à valeur maximale de contraste destiné à détecter une image dont la valeur de contraste est la maximale parmi une pluralité d'images acquises par le processus d'acquisition d'image.

12. Support de mémorisation pouvant être lu par ordinateur selon la revendication 11, comprenant en outre :

un processus (S25) de comparaison destiné à comparer la valeur de contraste calculée dans ledit processus de calcul de valeur de contraste avec une valeur de seuil prédéterminée,

dans lequel ledit processus de détection d'image à valeur maximale de contraste détecte l'image à valeur maximale de contraste en se basant sur un résultat de la comparaison dans le processus de comparaison.

13. Support de mémorisation pouvant être lu par ordinateur selon la revendication 11, comprenant en outre :

un processus (S53-S62) de détection de position horizontale d'objet destiné à détecter la position des objets l'un après l'autre en liaison avec le transfert des objets dans la direction horizontale, qui est perpendiculaire à l'axe optique du microscope,

dans lequel ledit processus de calcul de valeur de contraste calcule la valeur de contraste dans une zone imposée d'un objet photographiée dans l'image, en se basant sur l'information d'une position détectée dans ledit processus de détection de position horizontale.

14. Procédé de commande d'un système de micro-manipulation destiné à appliquer une micro-injection à une pluralité d'objets ayant des hauteurs différentes dans le champ de vision d'un microscope, au moyen d'une fine aiguille, comprenant les étapes consistant à :

transférer la fine aiguille selon la direction de l'axe optique du microscope (S01);

déterminer une position de début d'injection, qui est la position de la direction de l'axe optique de la fine aiguille qui commence l'injection, au moyen d'une position de direction de l'axe optique sur laquelle le bout de la fine aiguille est focalisé par une lentille de focalisation en tant que position de référence,

régler la position d'injection pour chacun des objets inclus dans le champ de vision du microscope,

détecter une position de focalisation indiquant une position sur laquelle l'objet est focalisé par la lentille de focalisation (S05) pour chacune des positions d'injection des objets réglées par l'étape de réglage de position d'injection ;

transférer de façon relative les positions relatives de l'objet et la position de la lentille de focalisation selon la direction de l'axe optique du microscope en se basant sur le résultat de la détection, et focaliser l'objet sur la lentille de focalisation (S05, S06, S07) ;

transférer la fine aiguille dans la position de début d'injection ; et

exécuter et commander (508) l'injection pour chacun des objets dans un état dans lequel chacun des objets est transféré à la position de focalisation correspondant à la position d'injection de l'objet.

**15.** Procédé selon la revendication 14, dans lequel ledit procédé de détection comprend :

acquérir des images dans le champ de vision du microscope, en conformité avec le transfert de l'objet selon la direction de l'axe optique du microscope ;

calculer une valeur de contraste indiquant l'amplitude du contraste de l'image (S05) ; et

détecter une image dont la valeur de contraste est la maximale parmi une pluralité d'images acquises (506).

**16.** Procédé selon la revendication 15, comprenant en outre l'étape qui consiste à :

détecter la position des objets l'un après l'autre en liaison avec le transfert de l'objet dans une direction perpendiculaire à l'axe optique du microscope (S53-S62),

dans lequel la valeur de contraste dans une zone prédéterminée d'un objet photographiée sur l'image est calculée en se basant sur l'information de la position détectée.

F I G.  1

```
                    ┌─────────────┐
                    │    START    │
                    └──────┬──────┘
                           ▼
   ┌───────────────────────────────────────────────┐  S01
   │  SHIFT A FINE NEEDLE AND FOCUS THE FINE NEEDLE │
   │            UNDER THE MICROSCOPE                │
   └───────────────────────┬───────────────────────┘
                           ▼
   ┌───────────────────────────────────────────────┐  S02
   │  DETERMINE THE INJECTION POSITION OF EACH SPECIMEN │
   └───────────────────────┬───────────────────────┘
                           ▼
   ┌───────────────────────────────────────────────┐  S03
   │  TRANSFER A STAGE IN SUCH A WAY AS TO LOCATE THE │
   │  INJECTION POSITION AT THE CENTER OF A SCREEN  │
   └───────────────────────┬───────────────────────┘
                           ▼
   ┌───────────────────────────────────────────────┐  S04
   │  TRANSFER A Z STAGE (OR OBJECT LENS) TO THE LOWEST │
   │  POSITION OF THE Z SCANNING RANGE AND CALCULATE │
   │            THE CONTRAST VALUE                  │
   └───────────────────────┬───────────────────────┘
                           ▼
   ┌───────────────────────────────────────────────┐  S05
   │  MINUTELY Z-TRANSFER THE STAGE (OR OBJECT LENS) │
   │     UPWARD AND CALCULATE A CONTRAST VALUE      │
   └───────────────────────┬───────────────────────┘
                           ▼
        No          THE CONTRAST VALUE                 S06
        ◄────────   START DECREASING?
                           │ Yes
                           ▼
   ┌───────────────────────────────────────────────┐  S07
   │  TRANSFER THE STAGE (OR OBJECT LENS) TO THE    │
   │        MAXIMUM CONTRAST Z POSITION             │
   └───────────────────────┬───────────────────────┘
                           ▼
   ┌───────────────────────────────────────────────┐  S100
   │  CORRECTION PROCESS IN THE CASE OF A FOCUS METHOD │
   │ BY TRANSFERRING THE OBJECT LES UPWARD OR DOWNWARD │
   └───────────────────────┬───────────────────────┘
                           ▼
   ┌───────────────────────────────────────────────┐  S101
   │  CORRECTION PROCESS BY AN AMOUNT OF DIFFERENCE │
   └───────────────────────┬───────────────────────┘
                           ▼
   ┌───────────────────────────────────────────────┐  S08
   │              INJECT A SOLUTION                 │
   └───────────────────────┬───────────────────────┘
                           ▼
        Yes          A SUBSEQUENT                      S09
        ◄────────   SPECIMEN TO WHICH INJECTION
                       IS APPLIED?
                           │ No
                           ▼
                    ┌─────────────┐
                    │     END     │
                    └─────────────┘
```

F I G. 2

(a)

113

SPECIMEN K

FINE NEEDLE L

C

CO

MOUSE

(b)

K

L

5

F

Ps

Pn

FIG. 3

F I G. 4

113

SPECIMEN K

FINE NEEDLE L

A

C

C O

MOUSE

K

5

P s

P n

L

F

FIG. 5

START

TRANSFER THE FINE NEEDLE AND FOCUS THE FINE NEEDLE UNDER A MICROSCOPE — S11

DETERMINE THE INJECTION POSITION OF EACH SPECIMEN — S12

TRANSFER THE STAGE IN SUCH A WAY AS TO LOCATE THE INJECTION POSITION OF EACH SPECIMEN — S13

SET A SURROUNDING AREA WITH THE INJECTION POSITION AT THE CENTER AS A AREA FOR EVALUATING CONTRAST IN AN IMAGE — S14

TRANSFER THE Z STAGE (OR OBJECT LENS) TO THE LOWEST POSITION OF THE Z SCANNING RANGE AND CALCULATE A CONTRAST VALUE — S15

FINELY TRANSFER THE STAGE (OR OBJECT LENS) AND CALCULATE A CONTRAST VALUE — S16

THE CONTRAST VALUE START DECREASING? — S17
No
Yes

TRANSFER THE STAGE (OR OBJECT LENS) TO A MAXIMUM CONTRAST Z POSITION — S18

CORRECTION PROCESS IN THE CASE OF A FOCUS METHOD BY TRANSFERRING THE OBJECT LENS UPWARD OR DOWNWARD — S110

CORRECTION PROCESS BY AN AMOUNT OF DIFFERENCE — S111

INJECT A SOLUTION — S19

A SUBSEQUENT SPECIMEN TO WHICH INJECTION IS TO BE APPLIED? — S20
Yes
No

END

F I G. 6

22

START

TRANSFER A FINE NEEDLE AND FOCUS THE FINE NEEDLE UNDER A MICROSCOPE — S21

DETERMINE THE INJECTION POSITION OF EACH SPECIMEN — S22

TRANSFER A STAGE IN SUCH A WAY AS TO LOCATE THE INJECTION POSITION AT THE CENTER OF A SCREEN — S23

SET A SURROUNDING AREA WITH THE INJECTION POSITION AT THE CENTER AS A AREA FOR EVALUATING CONTACT IN AN IMAGE — S24

THE CONTRAST VALUE LARGER THAN A SPECIFIED VALUE? — S25   Yes

No

TRANSFER THE STAGE (OBJECT LENS) TO THE LOWEST POSITION IN THE Z SCANNING RAGE — S26

TRANSFER THE Z STAGE (OR OBJECT LENS) TO A MAXIMUM CONTRAS Z POSITION — S27

No

THE CONTRAST VALUE START DECREASING? — S28

Yes

TRANSFER THE STAGE (OR OBJECT LENS) TO A MAXIMUM CONTRAS Z POSITION — S29

CORRECTING PROCESS IN THE CASE OF A FOCUS METHOD BY TRANSFERRING THE OBJECT LENS UPWARD OR DOWNWARD — S120

CORRECTION PROCESS BY AN AMOUNT OF DIFFERENCE — S121

INJECT A SOLUTION — S30

Yes

A SUBSEQUENT SPECIMEN OT WHICH INJECTION IS TO BE APPLIED? — S31

No

END

F I G. 7

F I G. 8

F I G. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004033031 A
- JP 1003560 A
- JP 6109979 A

- WO 9928725 A
- US 5886684 A
- US 2003197925 A

### Non-patent literature cited in the description

- **SUZUKI et al.** Automated Micro Handling. *the Proceedings 2003 IEEE International Symposium on Computational Intelligence in Robotics and Automation*